# EUROPEAN PATENT APPLICATION

(11) **EP 4 116 237 A1**
(43) Date of publication of application: **11.01.2023**
(21) Application number: 21184049.1
(22) Date of filing: 06.07.2021
(51) Int. Cl.: B65G 13/06, G05B 11/00, B65G 43/10

(54) **CONVEYOR SYSTEM; MOTOR ROLLER CONTROLLER AND METHOD FOR OPERATING A CONVEYOR SYSTEM**

(71) Applicant: Kyowa Europe GmbH, 42799 Leichlingen (DE); Industrial Software, 1618 Sofia (BG)
(72) Inventor: Petrov, Dimitar Ivanov, 1225 Sofia (BG); Yankov, Nikola Aleksandrov, 1142 Sofia (BG); Suvandzhiev, Dimitar Hristov, 1750/1784 Sofia (BG); Petrov, Ivan Dimitrov, 1225 Sofia (BG); Ichieda, Kazuya, 673-0424 Miki city Hyogo Prefecture (JP); Combs, Randy, 41005 Kentucky (US); Malina, Georg, 40237 Düsseldorf (DE)
(74) Representative: Cohausz & Florack

(57) **Abstract**

Conveyor system, for instance for conveying goods, packages and the like comprising at least two wired motor-roller controllers, wherein each wired motor-roller controller has at least one motor-roller control port and at least one wired signal bus port, at least two wireless motor-roller controllers, wherein each wireless motor-roller controller has at least on motor-roller control port and a wireless port, and wherein the two wired motor-roller controllers are connected in series along the signal bus via the signal bus port, characterized in that at each wired motor-roller controller senses a signal strength of wireless signals of the wireless motor-roller controllers, and the wired motor-roller controllers exchange information about the sensed signal strengths.

## Description

The subject matter relates to a conveyor system, for instance for conveying goods, packages and the like. The subject matter in particular relates to a conveyor system with motor-driven conveyors driven by motor rollers. The subject matter also relates to a method for operating such a conveyor system.

Motor-driven conveyor-rollers, a.k.a. motor rollers, comprise a roller body rotatable mounted about a roller axis. The roller body usually is a hollow tube. Within the roller body the motor is arranged. The motor is an electric motor which is configured to generate a rotational movement about the roller axis between an axle element and the roller body.

For the sake of understanding, in the following the term motor roller can be used for the motor within the roller body alone, a drive unit comprising the motor and a corresponding control circuit for the motor within the roller body or the roller body comprising the motor and/or the drive unit. In the following the term motor can be used for the motor as such as well as the drive unit comprising the motor as such and a corresponding control circuit for the motor.

It is well known that motor-rollers are operated by a control unit, also known as controller, being arranged external, outside the roller body. The controller exchanges control signals with the motor inside the roller body.

Motor-driven conveyors driven by motor-rollers of this type are used in conveyor systems. In such conveyor systems, a single motor rollers is used to operate several roller bodies within a conveyor zone. Conveyor systems oftentimes have several conveyor zones through which an object to be conveyed passes one after the other. As has been said, within each conveyor zone, at least one motor-driven conveyor-roller operates several rollers.

A motor-roller controller (also controller) has a wired power inlet for receiving electric power, preferably DC-power. Moreover, the controller has a wired motor roller port. The wired motor roller port is configured to provide the motor roller with drive power. The motor can be fed through the motor roller port using for instance a PWM-signal to control at least the rotational speed of the motor. In addition, status information and control signals can be exchanged between the motor roller and the controller using the motor roller port. Status information and/or control signals can, inter alia, include current motor speed, set motor speed, current conveyor speed, set conveyor speed, current rotational direction, set rotational direction, current/set operation mode, temperature, error messages, gear ratio of the motor gear, serial number, article number, production date etc. In particular, the motor roller port is a four wired motor port in line with EP 3 100 340 B1.

A conventional controller comprises a wired I/O (Input/Output)-port. This I/O-port is configured to exchange control information with a central control center for instance a central SPS. The I/O-port can, for instance, be configured using a proprietary protocol. However, the I/O-port can also be configured using standardized I/O-protocols, for instance according to CAN, DeviceNet, Ethernet Powerlink, INTERBUS, Fieldbus, LIN, M-Bus, PROFIBUS, VARAN etc. In addition to such a conventional controller, a wireless controller is know, which operates similar to the wired controller. The explanation for the wired and the wireless controllers can be used for both, with the exception that the I/O Bus of the wireless controller is a wireless bus, with appropriate wireless protocols.

The controller is configured to exchange motor roller control signals with a motor roller at the motor roller port, to exchange motor roller status signals with the motor roller at the motor roller port and to exchange motor roller control signals for the motor roller with a central control at the I/O-port. Exchange of the relevant control and status signals are well known and need no further description. It should be noted that all of the ports and inlets of the wired controller are preferably wired ports, requiring wiring between the motor roller and the controller and between the controller and centralized control center. Wiring usually is necessary to provide stable communication in industrial environments. A wireless controller has also a wiring with the motor roller and the power inlet, however, a wireless I/O port.

For the sake of understanding the motor-roller controller, a.k.a. controller may be arranged for controlling motor rollers. As such, within the controllers, at least one microprocessor may be provided for operating the motor rollers within a conveyor system and more particular for operating at least one motor roller within a conveyor system. The microprocessor may be programmed according to the following.

Conveyor systems usually are constructed with several conveyor zones being spatially arranged in series. That is, one conveyor zone is followed by the next conveyor zone. Within each conveyor zone at least one, preferably only one motor roller is provided. Two spatially neighbouring motor rollers may also be operated by a single motor roller controller.

Every motor roller or at least every second motor roller is controlled by a separate motor roller controller. The motor roller controllers are connected to each other and with a central controller using a serial bus. The wiring of the motor roller controllers along the serial bus usually corresponds to the relative spatial arrangement of the motor rollers to each other along the conveyor.

Conveyor systems usually do not only convey the products along one conveying direction, but products may be merged into the stream of products or diverted out of a stream of products by so called merger/diverters. A merger can be arranged in between two conveying zones. Products being conveyed downstream from one zone to the other may pass the merger while being conveyed downstream between the zones. In the downstream conveying direction products are lined up one after the other. It may be necessary to merge products from other sources into this line up of products for which reason a merger is provided. A merger is, besides being connected to the first and second conveying zones, connected to at least one third conveying zone, which transports the products from the other source towards the merger. In order to merge the product in the line-up of products being conveyed downstream along the conveying line, the third conveyor feeds in the products into the merger0 which takes care of the product being fed in, alinges these products in the line-up of products along the conveying line. As one can imagine in order not to disturb the downstream of products along the conveying line and in order to prevent collisions between products being transported from the first to the second conveying zone with products being conveyed by the third conveying zone into the merger, a complicated control and regulation mechanism is necessary between the controller of the first, the second and the third conveyor zone on the one hand and the controller of the merger on the other hand. The necessary communication as such is well known.

While a merger is required for merging products into the line-up of products, a diverter may sort out products from the line-up of products along the downstream conveying direction. When products in the line-up of products being transported downstream from the first conveying zone to the second conveying zone via a diverter, the diverter may be instructed to sort out certain products. Sorted out products may be fed by the diverter onto a third conveying zone, which conveying direction is downstream of, away from the diverter. Thus, diverted products are further transporter to another destination than products not being diverted. Also in the case of a diverter, communication between the first, the second and the third conveying zones i.e. the respective controllers and the controller of the diverter is necessary.

Both a merger and a diverter may have transport rolls and other transport mechanisms and apparatus, which take care of diverting out or merging in products in the line-up. The functioning of a merger and a diverter is well known in the art and will not be described anymore.

However, it has been found that due to wiring constraints and due to the use of a serial communication bus, the communication between the first, the second and at least the third controller as well as the controller of the merger/diverter is complicated and error prone. Oftentimes, the necessary communication needs to be routed via the central computer. Moreover, due to the serial signal bus, it may happen that neither the first, the second nor the third controller are wired to the same signal bus. Also the diverter/merger controller may be wired to a separate signal bus. Thus, it may happen, that there is no direct communication link between first, second, at least third motor roller controller and/or controller of the merger/diverter. This lack of direct communication channel makes the process of merging/diverting error prone and hard to code

For this reason it is the object of the present application to provide for a conveyor system and a method to make merger/diverter operations easier.

This object is solved by a conveyor system according to claim 1.

A conveyor system is in particular arranged for conveying goods, packages and the like along a conveying line. A conveying line may be comprised of at least two conveying zones, each of which is actuated using at least one motor roller. For the sake of understanding, the terms conveyor, conveyor line can be understood as synonyms. The conveying zone is comprised of one motor roller and at least two, preferably six or more passive rollers. A motor roller and a passive roller is comprised of a preferably cylindrical tube being rotatably connected to a rack. By actuating the motor roller, the passive rollers are also actuated and rotated in a desired direction.

In order to operate a motor roller, a motor roller controller is required. The motor roller controller is arranged for empowering the motor roller and moreover for controlling the action of the motor roller, in particular for controlling start/stop, direction, torque, number of revolution/RPM. Moreover, the motor roller controller can be arranged for sensing motor roller status. Empowering the motor roller and/or sensing motor roller status may be accomplished using the motor roller port of the motor roller controller. The motor roller is wired to the motor roller controller. Thus, the motor roller control port of the motor roller controller is a wired port. In order to operate a plurality of motor roller controllers, the motor roller controllers are in turn connected to a control bus. Conventional systems are comprised of a plurality of motor roller controllers each of which being connected to a wired control bus.

For the sake of maintenance and programming the conveyor system, in current systems the wiring of the motor roller controllers along the signal bus reflects the spatial arrangement of the motor rollers along the conveyor line. This means that consecutive motor roller controllers along the signal bus are connected to consecutive motor rollers along the conveyor line. This means that the topology of the wiring of the motor roller controllers reflects the topology of the arrangement of the motor rollers along a conveyor line.

As has been explained above, it is proposed according to an embodiment that each motor roller controller is connected via the motor roller controller port to at least one motor roller along a conveyor. The motor rollers along the conveyor are arranged in respective conveying zones. Consecutive conveying zones establish a conveyor line. Within each conveyor zone there is one motor roller and at least one passive roller. Via the motor roller port, the motor rollers can be activated, controlled and/or regulated as explained above.

As has been explained above, goods, packages or the like (a.k.a. products) are transported downstream a conveying direction via at least a first and a second conveyor zone. A first motor roller controller may be arranged to control a first motor roller within a first conveying zone. Moreover, at least a second motor roller controller may be arranged to control a second motor roller within a second conveyor zone. The first conveyor zone is upstream the second conveyor zone. The second conveyor zone is downstream the first conveyor zone. The first and second conveyor zones are arranged downstream the conveying direction of the products.

In order to divert (sort out) products being transported in a line-up along the first and second conveyor zones or to merge (sort in) products into the line-up of products begin transported along the first and second conveyor zones, there is provided a merger/diverter as explained above.

A merger can be understood as a combination of its specific physical arrangement and its logical control, forming a merge zone. A merge zone can be a zone in which multiple conveyor lines can seamlessly discharge products optionally using some kind of transfer unit. It may consist of one central line and one or two in-feed lines. The central line may be comprised of the first and second conveyor zones. The first and second conveyor zones can also be realized by one single conveyor zone.

The purpose or a merger is to merge products coming from the central line and the in-feed lines onto the merge zone. The merge zone can be located on the central line. A merger zone may have a transfer unit like a right angle transfer or 45 degree transfer under the merge zone to make the accepting products from the in-feed lines more precise. There may also be none of any such transfer unit and the in-feed zones may directly discharge onto the merge zone, using the product inertia and slippage.

A central line may be understood as the first and/or second conveyor zone(s) which enter and exit the merger zone without changing direction of the product. An in-feed line may be understood as the third conveyor zone, which may discharge products onto the merger zone. There may be left and/or right in-feed lines. The in-feed lines may terminate right before the merger zone and/or the central line.

All conveyor lines may provide product flow in only one direction, which may be defined as forward or downstream direction. The job of the merger logic is to allow merging of products from all lines without collisions.

A diverter can be understood as a combination of its specific physical arrangement and its logical control, forming a divert zone. A divert zone can be a zone from which products can be re-directed on multiple conveyor lines using some kind of transfer unit. Unlike the merger, the diverter preferably cannot operate without a transfer unit. The fiverter may consist of one central line and one or two out-feed lines. The central line may be comprised of the first and second conveyor zones. The first and second conveyor zones can also be realized by one single conveyor zone. Its purpose is to be able to divert products to the divert lines based on a criteria.

The purpose or a diverter is to divert products according to a criteria from the central line and the put them onto out-feed lines at the divert zone. The divert zone can be located on the central line. A divert zone has a transfer unit like a right angle transfer or 45 degree transfer under the divert zone. From the transfer unit the products are fed onto the out-feed zones using the transfer unit.

A central line may be understood as the first and/or second conveyor zone(s) which flows into the divert zone and out of the divert zone if no divert operation is warranted. An out-feed line may be understood as the third and/or fourth conveyor zone, which may obtain/accept products discharged from the merger zone. There may be left and/or right out-feed lines. The out-feed lines may originate right before the divert zone and/or the central line.

All conveyor lines may provide product flow in only one direction, which may be defined as forward or downstream direction. The job of the diverter logic is to allow diverting of products from the central lines onto the out-feed lines.

The merger/diverter is controlled by a dedicated controller that is arranged to control the merger/diverter. The merger/diverter according to embodiments is spatially arranged in between the first and the second conveyor zones. The merger/diverter may be understood as the merge/divert zones described above. Along the conveying direction, downstream of the first conveying zone and upstream of the second conveying zone there is provided the merger/diverter. The merger/diverter is arranged within stream of the products along the conveyor system. The operation of the merger/diverter as such is well known in the art and will not be described any further.

In order to make the process of merging/diverting easier and more intuitive, it is proposed that the first and the second motor roller controllers are connected via a wired I/O-port with a central controller. Moreover, the first and the second motor roller controllers and the merger/diverter, besides their wired I/O-port, each have a wireless communication port.

According do embodiments. There may be a centralized control in a programmable logic controller(PLC). According to embodiments, at least some, preferably all controllers (control modules / modules) from at least some, preferably all in-feed/out-feed lines of a merger/diverter may be in a same network and are not separated. In such an embodiment, a central PLC can connect to all modules and apply control for all modules. According to embodiments, a central PLC may have multiple interfaces. In such an embodiment, at least some, preferably all controllers (control modules / modules) from at least some, preferably all in-feed/out-feed lines of a merger/diverter may be separated and connected to distinct or separated interfaces of the PLC, however still on the same network and still be controlled by the same PLC.

However, it may be desired to separate the system into separated parts, enabling better segmentation and less support efforts.

In such a case, the control logic may be decentralized from a central PLC onto the dedicated controllers with at least one controller within the merge/divert zone. This, however, requires at least one controller within the merge/divert zone to be able to communicate to at least some, preferably all controllers of the merger/diverter, i.e. the central, left and/or right lines.

In order to enable the merger/diverter operation, it is proposed that the first and the second motor roller controllers are wirelessly connected to each other and the merger/diverter controller via their respective wireless communication port. Adding the wireless control enables different communication interfaces. This allows the controller of the merger/diverter to connect to all needed controllers (for instance at least one of central, left/right line) using different of its communication interfaces and control the product flow thereon, even though those controllers on the central/left/right lines may be in different networks and/or interfaces. The wireless communication interface allows the controller to communicate with controller of the various lines.

Via the wireless communication port (aka interface) commands, signals, instructions, information and the like may be exchanged between the motor roller controllers and the merger/diverter controller to control a merge/divert operation. In addition to the communication along the wireless communication port it may as well be possible to also exchange signals via the wired communication port. Thus, a fully integrated communication via both wired and the wireless interfaces enables controlling the divert/merge operation easier and more intuitively.

Products are conveyed downstream a conveying direction. Along the conveying direction products are lined-up one after the other. In spaces between two products a further product may be merged. A product in the line-up of products may also be diverted from this line-up. The products are, according to embodiments, conveyed along the first motor roller controller and the second motor roller controller downstream of the main conveying direction, e.g. the central line. The main conveying direction can also be understood as trajectory along which the products are transported.

As has been described above, the motor roller controllers have a wired I/O-port. In addition to the motor roller controllers, the merger/diverter controller may also have a wired I/O-port. Using this wired I/O-port, also the merger/diverter controller may, according to embodiments, be connected with the central controller. Thus, all motor roller controllers and the merger/diverter controller involved in the merging/diverting operation may on the one hand be wired via the wired I/O-port with a central controller and on the other hand may wirelessly communicate with each other. These two communication channels, i.e. wired and wireless, may be used to control the merge/divert operation. Due to the direct communication via the wireless communication port, the detour of commands via the central controller may, in instances, be dispensed off.

According to embodiments, it is proposed that at least a third motor roller controller controls a third motor roller of a third conveyor zone, e.g. a left/right line. As has been explained above, either a merger or a diverter operation requires a third conveyor zone. In the case of a merger, an additional source of product may be connected to the conveyor system via the third conveyor zone and the merger. Products within the line-up of products of the conveyor system may be provided to a further destination using a diverter and the third conveyor zone. The third conveyor zone is, in order to feed in or feed out products from a main conveying direction, spatially arranged at the merger/diverter. This means that products fed out by the diverter are fed in onto the third conveying zone or products to be fed in into the main conveying direction are fed onto the merger by the third conveying zone.

Not only a third conveying zone but also a fourth conveying zone, e.g. a left/right line, may be spatially arranged at the merger/diverter. For instance, it may be suitable, if first and second conveying zones are arranged on opposite sides of the merger/diverter and third and fourth conveying zones are also arranged on further opposite sides of the merger/diverter. The first and second conveying zones may be along a first trajectory and the third and fourth conveying zones may be along a second trajectory, being in angular relationship, in particular perpendicular, to the first conveying trajectory.

According to embodiments, it is proposed that at least one of the motor roller controllers and/or the merger/diverter controller are connected via the I/O-port and a wired serial signal bus to the central controller. As has been explained above, motor roller controllers usually are connected to each other and a central controller using a signal bus. This signal bus preferably is a serial signal bus. This serial bus preferably is a wired bus. The signal bus is connected to the controllers via their respective I/O-ports. Besides commands for the merge/divert operation, the signal bus may be used for exchanging commands between the controllers and the central controller in order to control the product flow downstream the conveying directions.

In case of a merge operation, the third and/or fourth motor roller controllers may control motor rollers of conveying zones which are upstream the merger. In case of a divert operation, the third and/or fourth motor roller controllers may control motor rollers of conveying zones that are downstream the diverter.

As has been also explained above, the motor roller controllers may be connected to the central controller via logically separated wired serial signal busses. That is, the serial bus used in the first conveying zone may be a different serial bus than being used in the second conveying zone. The wiring is separated from each other and each motor roller controller has its own electrical connection to a separate serial bus being connected to the central controller. This gives rise to problems in case of communication between the two conveying zones is necessary and moreover if a diverter/merger is arranged in between. The wireless communication channel provided according to embodiments solves this problem.

According to embodiments also the merger/diverter controller is connected to the central controller via a wired serial signal bus connection. Also this wired serial signal bus connection may be separated from the serial signal bus connection of the first motor roller controller and/or the second motor roller controller. At least one of the motor roller controllers and the merger/diverter may be connected to logically and/or mechanically and/or electrically separated serial signal busses. There is no direct link between the controllers making the merge/divert operation more complicated. The wireless communication channel provided according to embodiments solves this problem.

According to embodiments, at least one of the motor roller controllers and the merger/diverter controller are arranged to wirelessly exchange control signals for a merge/diver operation within the merger/diverter. That is, using the wireless communication, the merge/divert operation may be enabled in between the controllers without the direct need of a central controller. Nevertheless, it goes without saying that some control operations for the merge/divert operation may still be exchanged using the respective wired signal busses.

It is further proposed that the first motor roller controller, the second motor roller controller, the merger/diverter controller and at least the third motor roller controller are arranged to wirelessly exchange control signals for a merge/divert operation within the merger/diverter. For a divert operation it may, for instance be possible that the first motor roller controller wirelessly informs the merger diverter about an approaching product within the line-up of products to be diverted via the wireless channel. Once the product leaves the first motor roller controller, e.g. the first conveying zone, it is fed onto the merger/diverter. The merger/diverter may inform the first motor roller controller about having received this product. The merger/diverter may sort out this product and feed it into the third conveying zone. In parallel, the merger/diverter may wirelessly inform the third motor roller controller that a product is fed in, so that the third motor roller controller can convey the product downstream the third conveying zone. Also, the merger/diverter may wirelessly inform the second motor roller controller that the product is being diverted so that within the second conveying zone no transport is necessary and the motor roller of the second conveying zone needs not to be activated.

For a merge operation, the third motor roller controller may inform the merger/diverter about a product to be merged. Moreover, the third motor roller controller or the merger / diverter may inform the first motor roller controller about the upcoming merge operation. These communications may be exchanged wirelessly. In such a case, the first motor roller controller may control the first conveying zones such that a space in between the line-up of products is obtained, so that the new product being fed in via the third conveying zone may be placed on the merger. In addition, when the product is fed onto the merger/diverter, the merger/diverter may inform the second motor roller controller to speed up downstream conveying speed to take up the additional product. Also this may happen wirelessly.

The above are only two simple examples of merge/divert operations which as such are well known in the art. The gist of the invention lies in the fact that besides wired communication wireless communication between the respective controllers is enabled so that the merge/divert operation may be controlled also wirelessly among the respective controllers.

As has been said above, the communication for the merge/divert operation between the respective controllers may not only be wireless but also wired. It is preferred that a combination of wireless and wired communication takes place to control the merge/divert operation.

Within a conveyor system, according to embodiments, it is proposed that the spatial serial topology of the wired motor roller controllers along the wired signal bus and the spatial serial topology of the motor rollers along the conveyor correspond to each other. As has been said above, the motor rollers are spatially arranged serially along the conveyor line. In correspondence thereto, the wired motor roller controllers are arranged serially along the signal bus. The positioning of the wireless motor roller controllers in between the wired motor roller controllers may be computed, according to embodiments, based on the sensed signal strength of the wireless signals.

According to embodiments, it is proposed that each wireless motor roller controller is connected via the motor roller control port to at least one motor roller along the conveyor. It may be preferred that a wireless motor roller controller is connected to two motor rollers. Nevertheless, in case of two motor rollers, these are connected in series along the conveyor line even in case they are connected to one single wireless motor roller controller. The same holds true for the wired motor roller controllers. Also the wired motor roller controllers can be connected to one or two motor rollers. In the latter case, the motor roller controllers connected to one wired motor roller controller are arrange in a consecutive order along the conveyor line.

A further aspect is a method according to claim 15.

These and other aspects of the subject matter will be explained more detail with reference to the following figure. In the figure show:
- Fig. 1: a motor-roller-controller according to embodiments;
- Fig. 2: a conventional conveyor;
- Fig. 3: a conveyor system according to embodiments.

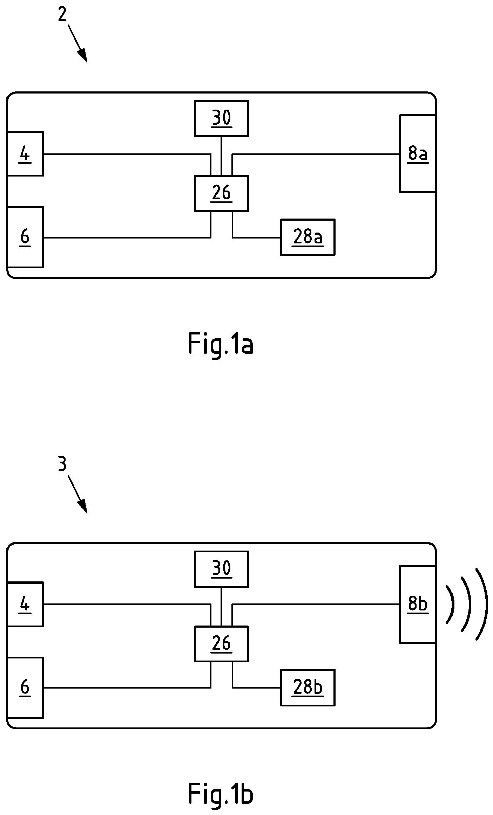

Fig. 1 shows a conventional wired motor roller controller 2 for motor rollers. The controller 2 has a power inlet 4. The power inlet 4 preferably is a DC-power inlet 4, in particular 12V or 24V power inlet. Power inlet 4 receives the electric power for operating the controller 2. The Power inlet 4 may also receive the electric power for operation a motor roller.

A motor roller can be connected to a motor roller port 6. Motor roller port 6 has at least two, preferably four connectors for connecting the motor roller. Via the motor roller port 6 the motor-roller may at least be supplied with electrical energy. In addition, the motor-roller may be controlled by exchanging control signals and/or status information signals via the motor roller port 6. Control of motor rollers as such is well known and will not be described in more detail.

Eventually, controller 2 has a wired I/O-port 8a. I/O-port 8a can be a communication port for wired communication, for instance according to an industry standard, in particular as mentioned above. Moreover, I/O-port 8a can support any proprietary protocol. Via port 8a control signals and/or status information can be exchanged between the controller 2 and a central control center.

The I/O port is connected to a central controller (not shown) via a wired serial bus 10. The wired serial bus can be arranged according to any known industry standard, for instance as explained above. The wired serial bus 10 can be at least two wired, preferably at least four wired bus. The wired serial bus 10 can connect at least two consecutive controllers 2 serially. The wired serial bus 10 can be terminated at a controller 2. The wired serial bus 10 can connect the least two consecutive controllers 2 with a central controller. The wired serial bus 10 can be terminated at the central controller.

The controller 2 further has a central processor 26 which is connected to the power inlet 4, the motor roller port 6 and the I/O-port 8a. The central processor 26 can be programmed. The programming may be understood as setting parameters for the motor roller. According to the programming the motor roller is instructed via motor roller port 6 to at least rotate in a certain direction at a certain speed. Any other parameters as described above can be parameterized and programmed.

It is possible to set the parameters of controller 2 and read out status information from controller 2 via port 8a. In addition, controller 2 may have a memory 30.

During operation, central processor 26 outputs control signals for a motor roller via motor roller port 6. The signals output, the amperage as well as the voltage of the output signals and the like depend on configuration settings (parameters) of controller 2. Moreover, during operation, central processor 26 reads out status information from the motor roller via motor roller port 6.

A controller 3 for a merger/diverter may be set up similarly to the controller 2 and the description of the controller 2 may apply for a controller 3 for a merger/diverter. Instead of the motor-roller port 6, the merger/diverter controller 3 may have a transporter port 6a, via which control signals for a transport means on the merger/diverter may be controlled. The control of a merger/diverter is known in the art.

In order to exchange wireless signals via an air interface the controller 3 may also comprise a wireless unit 28b. The wireless unit 28b may be arranged to exchange signals with wireless unit 28a of other controllers 2.

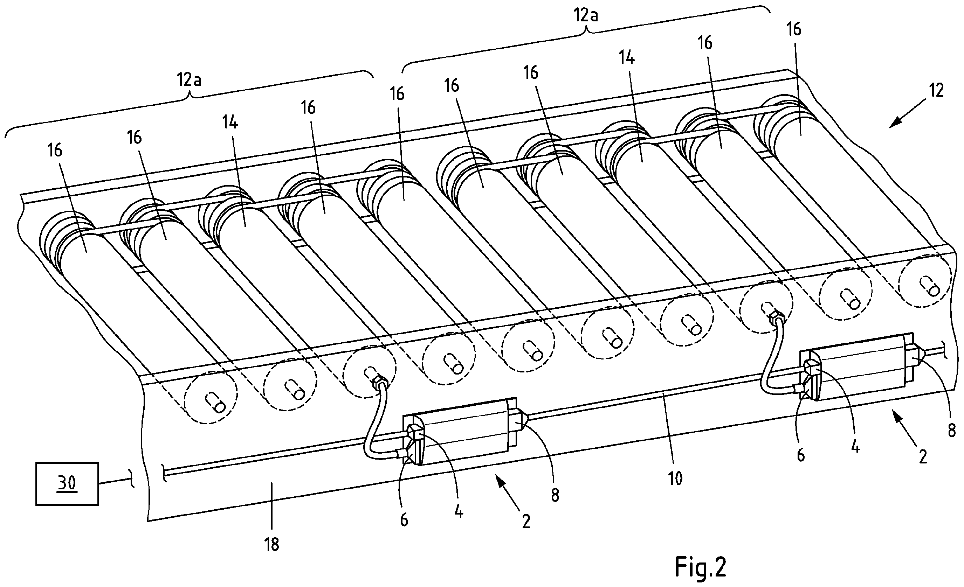

A conventional conveyor as illustrated in Fig. 2 may comprise motor rollers 14 and rollers 16. A conveyor line 12 may have two or more conveyor zones 12a. Within each conveyor zone 12a, one motor roller 14 is mechanically coupled with at least one, preferably between two to seven rollers 16, in particular by V-belts or poly-V-belts or the like. Other mechanical couplings are also possible.

A motor roller 14 is rotatable arranged on a rack 18 and comprises a motor within a hollow tube. The motor within the hollow tube is connected to the controller 2 via its motor roller port 6.

For each of these zones 12a, a separate controller 2 is provided controlling the respective motor-roller 14. The controllers 2 are connected to power and a control bus via their power inlets 4 and I/O-ports 8.

The controllers 2 along the respective zones 12a are connected to each other and a central controller 30 via the serial bus 10. Control signals are exchanged between the controllers 2 and the central controller 30 using the serial bus 10.

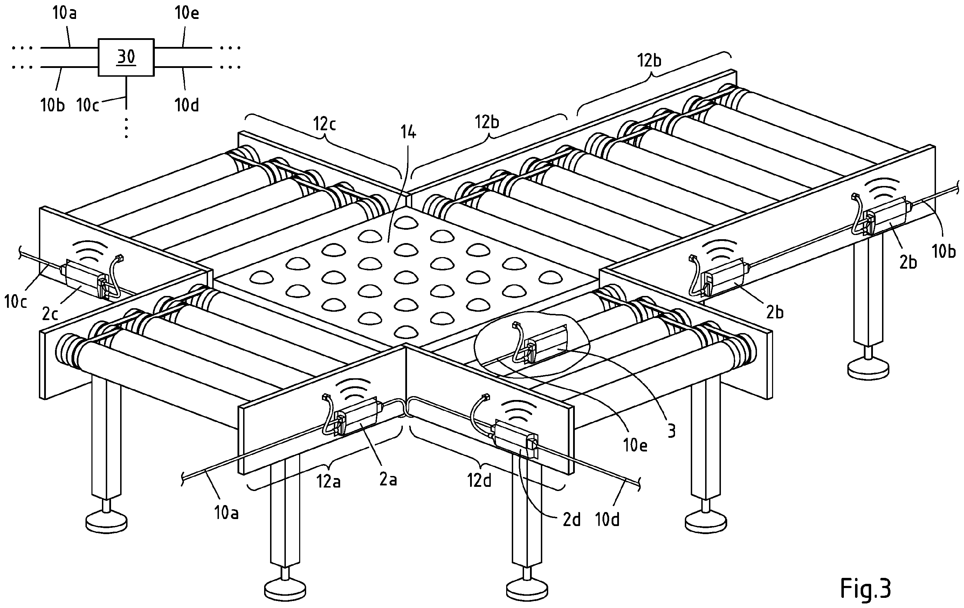

A conveyor sys 12 according to embodiments with a plurality of conveyor zones 12a-d and a merger/diverter 14 is illustrated in Fig. 3.

Fig. 3 illustrates a conveying system, where a first conveying zone 12a with a first controller 2a is arranged upstream of a merger/diverter 14. A second conveying zone 12b with a second controller 2b is arranged downstream merger/diverter 14.

Diverting from this main conveying direction along conveying zone 12a, merger/diverter 14, conveying zone 12b, there are provided third and fourth conveying zones 12c, 12d with their respective controllers 2c, 2d. Conveying zones 12c, 12d are arranged for feeding products onto merger/diverter 14 or transporting products away from merger/diverter 14. The operation of conveying zones 12c, d in terms of a merge/divert operation using merger/diverter 14 is well known in the art and will not been described in detail.

As can be seen in Fig. 3, a first serial bus 10a connects controller 2a and any upstream controllers 2. Separate therefrom, a second serial bus 10b connects controller 2b with downstream controllers. Thus, there is a first serial bus 10a upstream of merger/diverter 14 and a second serial bus 10b downstream of merger/diverter 14. The same may apply for the conveying zones 12c, d. For conveying zone 12c, there is a third serial bus 10c, connecting controller 2c and within conveying zone 12d there is a fourth serial bus 10d connecting controller 2d. Serial busses 10a-d are all terminated at a central controller 30. As can be seen in Fig. 3 the serial busses 10a-d terminate at the respective controllers 2a-d spatially neighbouring merger/diverter 14. It should be noted that it is not necessary that all serial busses 10a-d are separated from each other. However, the gist of the invention lies in that at least two of the serial busses 10a-d are separate from each other.

Besides serial busses 10a-d a further serial bus 10e terminates at central controller 30 an moreover, at a controller 3. Controller 3 is a merger/diverter controller 3 as explained above. Merger/diverter controller 3 may control merger/diverter 14 and the respective transport operation thereon to merge/divert products onto the conveyor as explained above.

Each of the controllers 2a-d, 3 may have a wireless unit 28a, 28b. Using wireless unit 28a, b, the controllers 2a-d, 3 may exchange control signals in order to enable a merge/divert operation on merger/diverter 14. These wireless signals may be signals for orchestrating controllers 2a-d, 3 during the merge/divert operation in order not to cause congestions or errors during the merge/divert operation. The wireless signals may be enhanced using also wired signals via the wired serial busses 10a-e and central controller 30.

## Claims

1. Conveyor system, for instance for conveying goods, packages and the like comprising:
- at least one first motor-roller controller that controls a first motor roller within a first conveyor zone,
- at least one second motor-roller controller that controls a second motor roller within a second conveyor zone,
- at least one merger/diverter controller that controls a merger/diverter spatially arranged at the first and the second conveyor zones,
**characterized in that,**
- the first and second motor roller controllers are connected via a wired I/O port with a central controller,
- the first and second motor roller controllers and the merger/diverter controller each have a wireless communication port and
- at least the first and second motor roller controllers are wirelessly connected to each other and the merger/diverted controller via the wireless communication port to control a merge/divert operation.

2. Conveyor system according to claim 1,
**characterized in that**
- the first motor roller controller and the second motor roller controller are arranged downstream of a main conveying direction.

3. Conveyor system according to one of the preceding claims,
**characterized in that**
- the merger/diverter controller is connected via a wired I/O port with the central controller.

4. Conveyor system according to one of the preceding claims,
**characterized in that**
- at least a third motor roller controller controls a third motor roller of a third conveyor zone, wherein the third conveyor zone is spatially arranged at the merger diverter.

5. Conveyor system according to one of the preceding claims,
**characterized in that**
- at least a fourth motor roller controller controls a fourth motor roller of a fourth conveyor zone, wherein the fourth conveyor zone is spatially arranged at the merger diverter.

6. Conveyor system according to one of the preceding claims,
**characterized in that**
- at least one of the motor roller controllers and/or the merger/diverter controller is connected via the I/O port and a wired serial signal bus to the central controller.

7. Conveyor system according to one of the preceding claims,
**characterized in that**
- the third and/or fourth motor roller controllers control motor rollers of respective conveyor zones that have a conveying direction that differs from the main conveying direction.

8. Conveyor system according to one of the preceding claims,
**characterized in that**
- the third and/or fourth motor roller controllers control motor rollers of respective conveyor zones such that the conveying directions of the conveyor zones are upstream or downstream of the merger/diverter.

9. Conveyor system according to one of the preceding claims,
**characterized in that**
- the first motor roller controller and the second motor roller controller are connected to the central controller via separated wired serial signal bus connections.

10. Conveyor system according to one of the preceding claims,
**characterized in that**
- the merger/diverter controller is connected to the central controller via a wired serial signal bus connection different from the wired serial signal bus connection of the first motor roller controller and/or the second motor roller controller.

11. Conveyor system according to one of the preceding claims,
**characterized in that**
- at least one of the motor roller controllers and the merger/diverter controller are arranged to wirelessly exchange control signals for a merge/divert operation within the merger/diverter, in particular
- the first motor roller controller, the second motor roller controller, the merger/diverter controller and at least the third motor roller controller are arranged to wirelessly exchange control signals for a merge/divert operation within the merger/diverter.

12. Conveyor system according to one of the preceding claims,
**characterized in that**
- the first motor roller controller, the second motor roller controller, the merger/diverter controller and at least the third motor roller controller are arranged to exchange control signals for a merge/divert operation within the merger/diverter via their respective wired serial bus connections.

13. Conveyor system according to one of the preceding claims,
**characterized in that**
- each motor-roller controller is connected via a motor-roller control port to at least one motor-roller along the conveyor and that
- the serial topology of the wired motor-roller controllers along the wired signal bus and the serial topology of the motor-rollers along the conveyor correspond to each other.

14. Conveyor system according to one of the preceding claims,
**characterized in that**
- wherein each wireless motor-roller controller is connected via the motor-roller control port to at least one motor-roller along the conveyor.

15. Method for controlling a merger/diverter within a conveyor system according to claim 1, comprising:
- controlling the first motor roller of the first conveyor zone with the first motor-roller controller,
- controlling the second motor roller of the second conveyor zone with the second motor-roller controller,
- controlling the merger/diverter spatially arranged at the first and the second conveyor zones with the merger/diverter controller,
**characterized in that**
- a merger/diverter operation, involving at least the first motor roller, the second motor roller and the merger/diverter, is controlled using both a wired serial connection of at least the first and second motor roller controllers with a central controller and a wireless connection of at least the first and second motor roller controllers with the merger/diverter controller.
